Europäisches Patentamt

**European Patent Office**

Office européen des brevets

(11) Numéro de publication : **0 090 773**
**B1**

(12)                    **FASCICULE DE BREVET EUROPÉEN**

(45) Date de publication du fascicule du brevet :
30.09.87

(51) Int. Cl.⁴ : **B 27 B 33/14**

(21) Numéro de dépôt : **83810118.6**

(22) Date de dépôt : **23.03.83**

(54) **Maillon de coupe pour chaîne de coupe.**

(30) Priorité : **25.03.82 CH 1821/82**

(43) Date de publication de la demande :
**05.10.83 Bulletin 83/40**

(45) Mention de la délivrance du brevet :
**30.09.87 Bulletin 87/40**

(84) Etats contractants désignés :
**AT BE DE IT LU NL SE**

(56) Documents cités :
**DE-B- 1 453 169**
**FR-A- 2 214 563**
**FR-A- 2 392 753**
**US-A- 2 508 784**
**US-A- 2 736 352**
**US-A- 2 746 494**

(73) Titulaire : **Hew & Milan Development SA**
**55, Boulevard de Pérolles**
**CH-1700 Fribourg (CH)**

(72) Inventeur : **L'inventeur a renoncé à sa désignation** .

(74) Mandataire : **Dietlin, Henri et al**
**DIETLIN, MOHNHAUPT & Cie S.A. Rue des Epinettes 19**
**CH-1227 Genève (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention a pour objet un maillon de coupe pour chaîne de coupe, notamment pour tronçonneuse.

Les chaînes de coupe pour tronçonneuses comprennent habituellement trois sortes de maillons : les maillons de coupe, les maillons de liaison ou de jonction et les maillons de guidage et/ou d'entraînement. Les chaînes de coupe formées de ces trois types de maillons glissent sur des lames présentant une extrémité arrondie et sont entraînées par des roues dentées qui engrènent en général les maillons de guidage et/ou d'entraînement. Les maillons de jonction, de même que les maillons de guidage et/ou d'entraînement posent peu de problèmes et présentent une usure raisonnable. Il n'en est pas de même des maillons de coupe, qui s'émoussent facilement et qui doivent être aiguisés ou remplacés très fréquemment.

Les maillons de coupe des chaînes pour tronçonneuses présentent généralement une pièce support agencée pour glisser sur la lame de la tronçonneuse et un organe de coupe solidaire de la pièce support. Cet organe de coupe peut être fixé sur la pièce support ou être une partie aiguisée et trempée de ladite pièce support. Dans les deux cas, le maillon de coupe présente des désavantages. Si l'organe de coupe est partie intégrante de la pièce support, le maillon est dans l'état actuel de la technique réalisé en acier trempé. Il s'émousse facilement et doit être aiguisé assez souvent.

On connaît des maillons de coupe où un organe de coupe en métal dur est fixé sur la pièce support. Le brevet américain No. 2 746 494 revendique un maillon de coupe, dans lequel l'élément de coupe peut être attaché au maillon de manière amovible. La liaison entre le maillon de coupe et l'élément de coupe est réalisée au moyen d'une tige placée à l'arrière de l'élément de coupe, la tige étant introduite dans un réceptacle tubulaire permettant d'assurer la position angulaire de l'élément de coupe dans les rainures. L'élément de coupe peut être introduit dans le réceptacle, mais il n'existe aucun dispositif de blocage permettant de le retenir dans ledit réceptacle. La liaison entre l'élément de coupe et le réceptacle est très probablement réalisée par friction. De plus, le réceptacle présente sur sa partie supérieure une fente avec une partie élargie servant à rendre indépendant les deux flancs latéraux du maillon.

Selon l'avis de la déposante, la chaîne proposée dans le brevet U. S. No. 2 746 494 ne pourra pas être utilisée de manière satisfaisante, car les éléments de coupe vont lors de l'utilisation sortir des maillons. La déposante désire préciser que les conditions d'utilisation d'une chaîne de coupe, par exemple dans les forêts, sont extrêmement dures. Les bois à couper présentent des nœuds ou des incrustations de minéraux ou encore des parties glacées lors d'une utilisation en hiver, qui provoquent des vibrations et provoquent un mouvement pendulaire de la chaîne qui saute hors de la rainure qu'elle est en train de réaliser pour retomber à l'intérieur de celle-ci. Il est absolument impensable pour l'homme du métier que les éléments de coupe introduits dans le réceptacle des maillons du brevet américain cité ci-dessus puissent rester en place lors d'une utilisation de la chaîne.

La même remarque peut-être faite relativement à la chaîne décrite dans le brevet américain No. 2 736 352, où les éléments de coupe sont retenus dans les maillons par friction.

Le but de l'invention est de remédier à ces inconvénients et de proposer un maillon de coupe pour chaîne de coupe dont l'organe de coupe présente une grande dureté, tout en restant solidaire de la pièce support. Le maillon devra ainsi pouvoir supporter des chocs sans que l'organe de coupe se détache du maillon et sans que le maillon se casse.

Le maillon de coupe pour chaîne de coupe, notamment pour tronçonneuse selon l'invention, comprenant une pièce support agencée pour glisser sur un guide et un organe de coupe retenu entre les flancs de la pièce support formés à cet effet, est caractérisé en ce que la pièce support est réalisée d'une seule pièce en métal doux et comprend deux flancs parallèles placés à distance l'un de l'autre et reliés par un arrondi pour former un U inversé, l'organe de coupe se présentant sous forme d'une plaquette en métal dur disposée transversalement par rapport aux deux flancs de la pièce support dont la partie arrière — par rapport à l'axe de déplacement du maillon — présente un tenon central enfermé entre les deux flancs et l'arrondi, la pièce support présentant en son milieu une partie découpée présentant sur chaque flanc une encoche de maintien dans lesquelles viennent s'introduire les parties inférieures latérales de la plaquette, qui est enfermée au milieu de la pièce support par rapport à l'axe de déplacement du maillon.

L'élément de coupe est ainsi relié au maillon d'une manière extrêmement fiable. Les moyens de liaison entre la plaquette et le maillon comprennent ainsi des moyens de liaison longitudinaux (tenon central retenu entre les flancs et la partie arrondie) et des moyens transversaux (rainure dans les flancs). Il a été remarqué que cette liaison ne peut pas être détruite, quelle que soit l'utilisation de la chaîne. Il peut arriver qu'un maillon soit cassé, ceci restant d'ailleurs extrêmement rare vue le fait que le maillon est réalisé dans un métal doux.

Les deux flancs de la pièce support peuvent présenter des alésages correspondants à l'avant et à l'arrière du maillon, les alésages étant destinés à recevoir des axes de liaison avec un maillon de guidage, d'entraînement ou de jonction.

La pièce support peut présenter à l'avant deux ailettes de retenue de coupe, suivies d'une partie d'ouverture précédant la plaquette de coupe.

La plaquette de coupe peut être réalisée en carbure de tungstène.

La plaquette peut former un angle θ pouvant varier de 0 à 45° par rapport à une perpendiculaire au plan de symétrie du maillon, la plaquette étant inclinée sur la gauche ou sur la droite par rapport à la direction d'avance du maillon.

L'invention a également pour objet un procédé de fabrication d'un maillon de coupe, caractérisé en ce qu'on réalise la pièce support par une opération de découpe dans un plan, en ce qu'on place une plaquette de coupe dans l'évidement prévu au centre de la pièce support et en ce qu'on amène l'un vers l'autre les deux flancs de la pièce support, de manière à enfermer le tenon de la plaquette entre lesdits flancs et l'arrondi et à retenir les parties inférieures latérales de la plaquette dans des encoches de maintien prévues de part et d'autre de l'évidement central.

Dans le maillon ainsi réalisé, l'élément de coupe est enfermé dans la pièce support qui se referme autour dudit élément de coupe.

Le dessin représente, à titre d'exemple, un mode d'exécution ainsi qu'une variante d'un maillon de coupe pour chaîne de coupe, notamment pour tronçonneuse.

Dans le dessin :

la figure 1 est une vue de dessus d'une pièce support d'un maillon de coupe après une opération d'étampage réalisée au moyen d'une matrice, la pièce support-étant encore dans un plan,

la figure 2 est une vue frontale d'une plaquette de coupe en métal dur, notamment en carbure de tungstène, qui sera enfermée dans la pièce support de la figure 1,

la figure 3 est une vue de côté de la plaquette de coupe de la figure 2,

la figure 4 est une vue de côté de la pièce support d'un maillon de coupe, après que celle-ci ait été pliée et que la plaquette de coupe des fig. 2 et 3 ait été enfermée dans la pièce support lors du pliage pour former le maillon,

la figure 5 est une vue frontale du maillon de la figure 4,

la figure 6 est une vue de côté d'une variante du maillon de coupe représentée dans les fig. 1 à 5, la pièce support enfermant la plaquette de coupe selon un angle aigu relativement à la direction d'avance du maillon,

la figure 7 est une vue de dessus de la variante du maillon de la figure 6, et

la figure 8 est une vue frontale de la variante du maillon de la figure 6.

Une pièce support 1 qui formera un maillon de coupe présente deux flancs 2 et 3 symétriques par rapport à un axe 4. La partie centrale de la pièce présente une partie découpée 5 délimitant un secteur en tronc de cône 6 symétrique par rapport à l'axe 4 et formant un angle α de 136°, deux encoches symétriques 7 et 8 et deux ailes 9 et 10 formant les parties supérieures avant des flancs 2 et 3. Lorsque la pièce 1 sera pliée de manière à rendre parallèle les flancs 2 et 3, l'évidement 5 formera une partie ouverte à la suite des deux ailettes 9 et 10 et les encoches 7 et 8 pourront retenir l'extrémité inférieure d'une plaquette de coupe qui sera enfermée dans la pièce 1.

Les flancs 2 et 3 présentent des alésages 11, 12 ; respectivement 13, 14 qui correspondront lorsque la pièce 1 sera pliée et qui serviront à recevoir des axes pour lier le maillon de coupe formé à l'aide de la pièce 1 avec à l'avant et à l'arrière des maillons de guidage et/ou d'entraînement ou des maillons de liaison, qui ne sont pas décrits dans la présente demande. Les flancs 2 et 3 de la pièce 1 présentent finalement deux parties découpées circulaires 15 et 16.

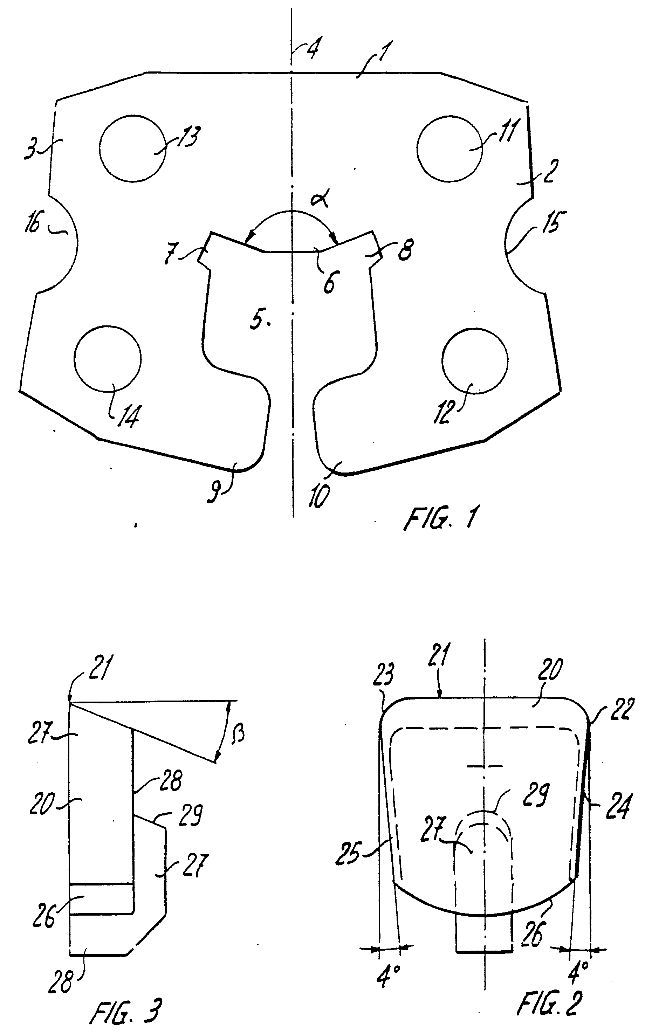

L'organe de coupe est représenté dans les fig. 2 et 3 et comprend une plaquette 20 en carbure de tungstène présentant une arête de coupe 21 présentant de chaque côté de la plaquette une partie arrondie 22, respectivement 23, suivie d'une partie droite 24, respectivement 25. La partie inférieure 26 de la plaquette n'est pas aiguisée et présente une surface circulaire à angle droit avec la surface avant 27 et arrière 28 de la plaquette. C'est cette partie en arrondi 26 qui sera retenue dans les encoches 7 et 8 de la pièce support lors du pliage selon l'axe 4 (fig. 1). Les parties 21, 22, 23, 24, 25, sont des parties de coupe et présentent un angle avec la verticale β pouvant varier entre 0 et 30°. Pour la coupe du bois, cet angle β sera approximativement de 22°. L'angle formé par les parties 24, 25 avec la verticale est de 4°. La plaquette 20 présente en son milieu un tenon 27 se prolongeant sous la plaquette par une partie 28.

Il est évident que la plaquette 20 représentée dans les fig. 2 et 3 peut subir des transformations. L'arête de coupe 21 peut par exemple être de forme arrondie. D'autre part, le tenon central 27 peut également présenter une autre forme. Cependant, si le pliage selon l'axe 4 de la pièce 1 doit être réalisé selon un arrondi, la partie supérieure 29 du tenon 27 sera de préférence également de forme arrondie, de manière à pouvoir épouser la surface intérieure de la pièce support 1 après que le pliage ait été effectué. Comme représenté dans les fig. 4 et 5, la plaquette 20 forme un angle de coupe γ avec la verticale, l'angle γ pouvant varier entre 0 et 45°. Pour effectuer une coupe dans du bois, l'angle γ sera de 15° environ, et l'angle de dépouille ε sera de 7° environ. On remarque dans les fig. 4 et 5, que, après le pliage effectué selon un arrondi autour de l'axe 4, les flancs 2 et 3 de la pièce 1 viennent se placer parallèlement l'un à l'autre et il se forme autour du tenon 27 un arrondi 30 qui s'applique contre la surface 29 circulaire du tenon 27. L'extrémité 26 de la plaquette 20 s'introduit dans les encoches 7 et 8 de la pièce support 1, de sorte que la plaquette est retenue dans le maillon 1 par les côtés latéraux des flancs 2 et 3 et l'arrondi 30. Une pointe de soudure 31 peut être appliquée entre la pièce support 1 et la plaquette 20 dans le but d'éviter tout mouvement relatif entre ces deux pièces. Il est bien évident pour l'homme du métier que la pointe de soudure 31 ne sert pas à fixer les deux pièces l'une par rapport à l'autre, la fixation étant réalisée par le fait que la plaquette est enfermée dans la pièce 1 par des moyens mécaniques consistant dans les encoches 7 et 8 et dans le pliage réalisé autour du tenon 27. D'autre part, la liaison entre la plaquette et la pièce support peut également être réalisée à l'aide d'une brasure.

Le maillon de coupe qui vient d'être décrit en regard des fig. 1 à 5 peut être avantageusement utilisé pour couper des matériaux relativement durs, par exemple des bois très durs, tel que du chêne ou de la pierre, du béton, etc. Pour couper des matériaux plus tendres, par exemple du bois, tel que du sapin, il est avantageux de prévoir un maillon de coupe dont la plaquette présente une inclinaison latérale par rapport à son mouvement d'avance. Un tel maillon est représenté dans la variante des fig. 6, 7 et 8. Dans cette variante, la pièce support 40 présente de légères modifications relativement à la pièce support 1 du mode d'exécution des fig. 1 à 5. Des ailettes de retenue de coupe 41, 42, précèdent une partie découpée 43, laissant un évidement avant la plaquette de coupe 44, qui est placée transversalement et non plus à 90° par rapport au plan de symétrie 45 (fig. 7) du maillon. Ce plan de symétrie 45 est le plan placé à égale distance des deux flancs 46 et 47 de la pièce 40 parallèles entre eux et reliés par la partie arrondie pliée 48. Comme représenté dans les fig. 6 à 8, la plaquette 44 est de forme quadrangulaire et présente trois parties latérales en biseaux 49, 50 et 51 formant toutes les trois une arête tranchante avec la partie avant de la plaquette.

A sa partie inférieure, la plaquette présente un tenon de maintien 52 semblable au tenon 27 de la plaquette du mode d'exécution des fig. 1 à 5. L'évidement 43 prévu dans la pièce 40 est réalisé dans la partie où il entre en contact avec la surface arrière de la plaquette, de manière asymétrique, afin de pouvoir épouser la surface arrière de la plaquette 44, tout en maintenant celle-ci transversalement par rapport au mouvement d'avance du maillon. La plaquette 44 est retenue dans la pièce support 40 de manière à définir un angle d'inclinaison latérale $\theta$ pouvant varier de 0 à 45°. Mise à part cette inclinaison latérale $\theta$ représentée dans la figure 7, la plaquette 44 présente comme la plaquette du mode d'exécution des fig. 1 à 5 un angle de coupe $\gamma$ et un angle de dépouille $\varepsilon$ variant dans les mêmes limites que les angles correspondants des modes d'exécution 1 à 5.

Dans le cas où l'on fabriquera des maillons selon la variante des fig. 6, 7 et 8 avec une inclinaison latérale définie par l'angle $\theta$, il est indispensable de prévoir deux types de maillons, l'un présentant un inclinaison latérale à gauche, l'autre présentant une inclinaison latérale à droite. Dans la figure 7, est représentée en pointillé une plaquette 53 qui formera l'inclinaison correspondante relativement à la plaquette 44. Lors du montage d'une chaîne, on placera alternativement un maillon avec une inclinaison à gauche, puis un maillon avec une inclinaison à droite, puis à nouveau un maillon avec une inclinaison à gauche, etc. ..., étant entendu qu'entre chaque maillon de coupe, sont intercalés des maillons de guidage et/ou d'entraînement.

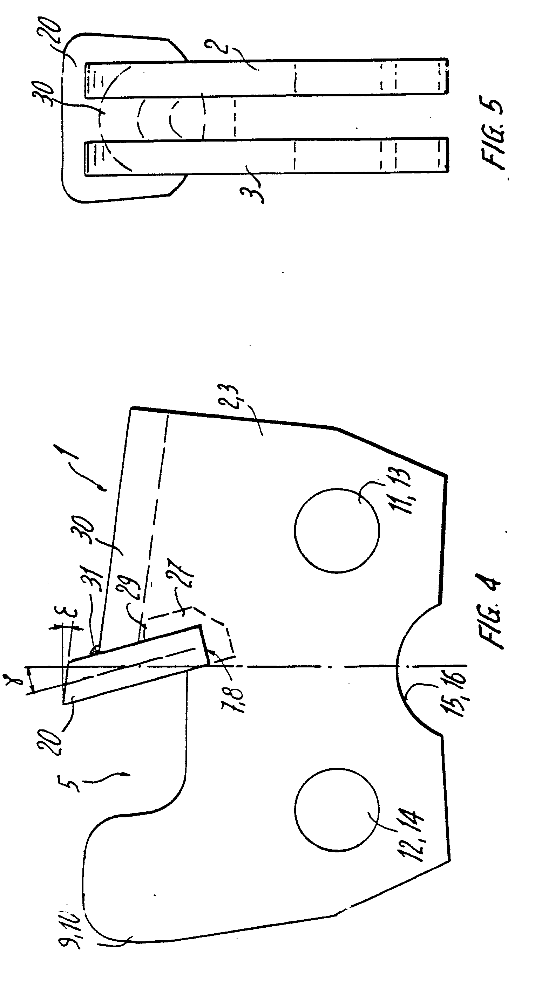

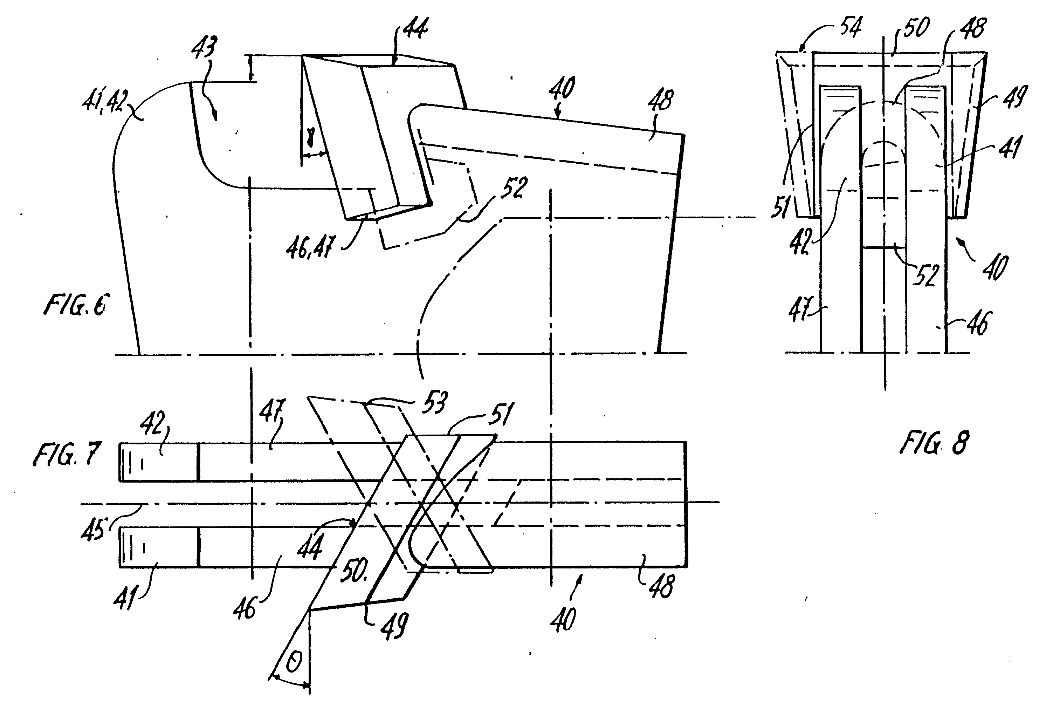

Dans la variante des fig. 6, 7 et 8, la plaquette présente une forme asymétrique. L'homme du métier comprendra qu'il n'est pas absolument indispensable que la plaquette 44 ait une forme asymétrique. Il est possible en variante de réaliser la plaquette 44 comme représenté en 54 dans la figure 8, de manière à avoir des plaquettes symétriques.

Comme mentionné plus haut, les plaquettes sont de préférence réalisées en carbure de tungstène. Cependant, elles peuvent tout aussi bien être réalisées dans un autre matériau dur, par exemple du carbure de titane ou dans tout autre matériau présentant une dureté équivalente ou carbure de tungstène ou au carbure de titane. Les pièces supports sont elles réalisées. dans un matériau d'une moins grande dureté, par exemple en acier. Il sera de préférence utilisé des aciers qui selon les essais Vickers présentent une dureté de 540 à 620 sous 20 kg. Une telle dureté correspond à de l'acier employé sous la norme DIN sous la dénomination Mk75.

Les maillons qui viennent d'être décrits sont en général reliés par des axes non représentés avec des maillons de guidage non représentés qui viennent s'introduire entre les flancs 2 et 3 du maillon de coupe représenté dans les fig. 1 à 5, respectivement 6 à 8 du dessin, les maillons de guidage étant eux-mêmes reliés à d'autres maillons de guidage non représentés au moyen de deux maillons de jonction non représentés, placés de chaque côté des maillons de guidage. Après les maillons de jonction, qui sont en général à double, on retrouve un maillon de guidage, puis à nouveau un maillon de coupe.

L'avantage du maillon de coupe qui vient d'être décrit réside dans le fait qu'il est réalisé à partir d'une pièce support choisie dans un acier qui n'est pas trop dur, de manière à éviter que le maillon ne casse, cette pièce en acier enfermant un outil de coupe dont l'épaisseur peut être choisie et d'une dureté beaucoup plus grande que la pièce support. Le fait que l'organe de coupe soit enfermé dans la pièce support assure une liaison indestructible entre ces deux pièces. La chaîne réalisée à l'aide du maillon qui vient d'être décrit offre des qualités de résistance qui est de beaucoup supérieure aux chaînes conventionnelles. Il est évident qu'elle peut être réalisée pour différents usages, c'est-à-dire pour couper par exemple du bois ou de la pierre. Il suffira en fonction de ces usages de changer les angles de coupe $\gamma$, de dépouille $\varepsilon$ et l'angle transversal $\theta$ des plaquettes de coupe relativement aux pièces supports.

## Revendications

1. Maillon de coupe pour chaîne de coupe, notamment pour tronçonneuse, comprenant une pièce support (1, 40) agencée pour glisser sur un guide et un organe de coupe (20, 44) retenu entre les flancs de la pièce support formés à cet effet, caractérisé en ce que la pièce support (1 ; 40) est réalisée d'une seule pièce en métal doux et comprend deux flancs parallèles (2, 3 ; 46, 47) placés à distance l'un de l'autre et reliés par un arrondi (30 ; 48) pour former un U inversé, l'organe de coupe (20 ; 44) se présentant sous forme d'une plaquette en métal dur disposée transversalement par rapport aux deux flancs (2, 3 ; 46, 47) de la pièce support (1 ; 40), dont la partie arrière — par rapport à l'axe de déplacement du maillon — présente un tenon central (27 ; 52) enfermé entre les deux flancs (2, 3 ; 46, 47) et l'arrondi (30 ; 48), la pièce support présentant en son milieu une partie découpée (5) présentant sur chaque flanc une encoche de maintien (7, 8) dans lesquelles viennent s'introduire les parties inférieures latérales de la plaquette, qui est enfermée au milieu de la pièce support par rapport à l'axe de déplacement du maillon.

2. Maillon selon la revendication 1, caractérisé en ce que les deux flancs (2, 3 ; 46, 47) présentent des alésages (11, 12, 13, 14) correspondants à l'avant et à l'arrière du maillon, les alésages étant destinés à recevoir des axes de liaison avec un maillon de guidage ou de jonction.

3. Maillon selon la revendication 1, caractérisé en ce que la pièce support présente à l'avant deux ailettes de retenue de coupe (9, 10) suivies d'une partie d'ouverture (5) précédant la plaquette de coupe (20 ; 44).

4. Maillon selon la revendication 1, caractérisé en ce que la plaquette de coupe est en carbure de tungstène ou toute autre matière d'une dureté sensiblement équivalente.

5. Maillon selon la revendication 1, caractérisé en ce que la plaquette de coupe (20 ; 44) forme un angle de coupe γ pouvant varier entre 0 et 45° et un angle de dépouille ε situé entre 0 et 20°.

6. Maillon selon la revendication 1, caractérisé en ce qu'une soudure ou brasure est réalisée entre la pièce support (1 ; 40) et la plaquette de coupe (20 ; 44).

7. Maillon selon la revendication 1, caractérisé en ce que la plaquette (20 ; 44) forme un angle θ pouvant varier de 0 à 45° par rapport à une perpendiculaire au plan de symétrie du maillon, la plaquette étant inclinée sur la gauche ou sur la droite par rapport à la direction d'avance du maillon.

8. Maillon selon la revendication 7, caractérisé en ce que la plaquette forme un angle θ de 0° par rapport à la perpendiculaire du plan de symétrie du maillon.

9. Procédé de fabrication du maillon de coupe selon la revendication 1, caractérisé en ce qu'on réalise la pièce support (1 ; 40) par une opération de découpe dans un plan, en ce qu'on place une plaquette de coupe (20 ; 44) dans l'évidement (5) prévu au centre de la pièce support et en ce qu'on amène l'un vers l'autre les deux flancs (1, 2 ; 46, 47) de la pièce support, de manière à enfermer le tenon de la plaquette (27 ; 52) entre lesdits flancs et l'arrondi (30 ; 48) et à retenir les parties inférieures latérales de la plaquette dans des encoches de maintien (7, 8) prévues de part et d'autre de l'évidement central (5).

10. Chaîne de coupe, caractérisée en ce qu'elle comprend des maillons de coupe selon la revendication 1.

**Claims**

1. A cutting link for a chain cutter, more particularly for a motor chain saw, comprising a support member (1 ; 40) adapted to slide on a guide, and a cutting element (20 ; 44) maintained between the flancs of the support member adapted thereto, characterised in that the support member (1 ; 40) is made in one piece of a soft metal and comprises two parallel and spaced apart flancs (2, 3 ; 46, 47) interconnected by a rounded portion (30 ; 48) in order to form an inverted « U », the cutting element (20 ; 44) taking the form of a small plate of hard metal and being disposed transversally with respect to the two flancs (2, 3 ; 46, 47) of the support member (1 ; 40) whose rear portion, relative to the axis of movement of the cutting link, presents a central stud (27 ; 52) enclosed between the two flanks (2, 3 ; 46, 47) and the rounded portion (30 ; 48), the support member having on its axis an opening (5) provided on each flanc with a retaining notch (7, 8) in which are inserted the lateral inferior portions of the small plate, enclosed in the central portion of the support member in relation to the axis of movement of the cutting link.

2. A link according to claim 1, characterised in that the two flanks (2, 3 ; 46, 47) have corresponding borings (11, 12, 13, 14) at the front and the rear of the link, for receiving link pins for connection to a guide link or connecting link.

3. A link according to claim 1, characterised in that the support member has at its front end two cutlocating projections (9, 10), followed by a portion of opening (5), the cutting plate (20 ; 44) being arranged at the rear end of said opening.

4. A link according to claim 1, characterised in that the cutting plate is made of tungsten carbide or any other material having substantially the same hardness as tungsten carbide.

5. A link according to claim 1, characterised in that the cutting plate (20 ; 44) forms a cutting angle γ in the range of 0° to 45° and a clearance angle ε comprised between 0° and 20°.

6. A link according to claim 1, characterised in that the supporting member (1 ; 40) and the cutting plate (20 ; 44) are secured together by soldering or brazing.

7. A link according to claim 1, characterised in that the plate (20 ; 44) is inclined at an angle θ comprised between 0° and 45° to a perpendicular to the plane of symmetry of the link, the plate being inclined to the left or to the right referred to the direction of forward movement of the link.

8. A link according to claim 7, characterised in that the plate forms an angle θ of 0° with the perpendicular to the plane of symmetry of the link.

9. A method of manufacturing a cutting link according to claim 1, characterised in that the said support member (1 ; 40) is first cut out as a flat workpiece, the said cutting plate (20 ; 44) is then placed in the opening (5) in the central portion of the support member, the two flancs (2, 3 ; 46, 47) of the support member are bent one toward the other in order to enclose the stud (27 ; 52) of the small cutting plate between said flancs and the rounded portion (30 ; 48) and to insert the lateral inferior portions of the small plate into said retaining notches (7, 8) appearing on each side of the opening (5).

10. A cutter chain characterised by cutting links according to claim 1.

**Patentansprüche**

1. Schneidglied für Sägekette, insbesondere für Motorkettensägen, mit einem auf einer Führung laufendem Trägerteil (1 ; 40) und einem zwischen Flanken des passend geformten Trägerteils gehaltenen Schneidorgan (20 ; 44), dadurch gekennzeichnet, dass das Trägerteil (1 ; 40) einstückig aus einem weichen Metall geformt ist und zwei parallele, im Abstand verlaufende Flanken (2, 3 ; 46, 47) aufweist, die durch einen gerundeten Bereich (30 ; 48) miteinander verbunden sind und damit ein umgekehrtes U bilden, dass das Schneidorgan (20 ; 44) ein quer zu den Flanken (2, 3 ; 46, 47) des Trägerteils (1 ; 40) eingesetztes Plättchen aus Hartmetall ist, wobei der hintere Bereich des Plättchens, in der Laufachse des Schneidglieds gesehen, einen mittigen Zapfen (27 ; 52) aufweist, der zwischen den beiden Flanken (2, 3 ; 46, 47) und dem gerundeten Bereich (30 ; 48) eingeschlossen ist, und dass das Trägerteil im Mittelbereich einen Ausschnitt (5) mit je einer Halteaussparung (7, 8) auf den Flanken versehen ist, in welche die seitlichen unteren Bereiche des Plättchen eingreifen, das in der Mitte des Trägerteils in Richtung der Laufachse des Schneidglieds eingeschlossen ist.

2. Schneidglied nach Anspruch 1, dadurch gekennzeichnet, dass die beiden Flanken (2, 3 ; 46, 47) einander entsprechende Bohrungen (11, 12, 13, 14) im vorderen und hinteren Bereich des Gliedes aufweisen, die dazu bestimmt sind, Verbindungsachsen von Führungs- oder Verbindungsgliedern aufzunehmen.

3. Schneidglied nach Anspruch 1, dadurch gekennzeichnet, dass am Trägerteil vorn zwei Schnitthalteflügel (9, 10) vorgesehen sind, die dann in einen Bereich des Ausschnittes (5) übergehen, der vor dem Schneidplättchen (20 ; 44) liegt.

4. Schneidglied nach Anspruch 1, dadurch gekennzeichnet, dass das Schneidplättchen aus Wolframcarbid oder einem anderen Material mit einer dem Wolframcarbid gleichkommenden Härte besteht.

5. Schneidglied nach Anspruch 1, dadurch gekennzeichnet, dass das Schneidplättchen (20 ; 44) einen Schnittwinkel $\gamma$, der zwischen 0° und 45° liegt, und einen Freiwinkel $\varepsilon$ zwischen 0° und 20° aufweist.

6. Schneidglied nach Anspruch 1, dadurch gekennzeichnet, dass das Trägerteil (1 ; 40) mit dem Schneidplättchen (20 ; 44) verschweisst oder hartverlötet ist.

7. Schneidglied nach Anspruch 1, dadurch gekennzeichnet, dass das Schneidplättchen (20 ; 44) einen Winkel $\theta$ von 0° bis 45° in bezug auf eine Senkrechte zur Symmetrieebene des Schneidglieds bildet, wobei das Schneidplättchen gegen die Laufrichtung des Schneidgliedes nach links oder rechts geneigt ist.

8. Schneidglied nach Anspruch 7, dadurch gekennzeichnet, dass das Schneidplättchen einen Winkel $\theta$ von 0° mit der Senkrechten zur Symmetrieebene des Schneidglieds bildet.

9. Verfahren zur Herstellung des Schneidglied nach Anspruch 1, dadurch gekennzeichnet, dass man das Trägerteil (1 ; 40) als Flachstück ausschneidet, und dass man ein Schneidplättchen (20 ; 44) in den mittigen Ausschnitt (5) des Trägerteiles bringt und dann die beiden Flanken (2, 3 ; 46, 47) des Trägerteils gegeneinander umbiegt, wobei der Zapfen (27 ; 52) des Schneidplättchens zwischen den Flanken und dem gerundeten Bereich (30 ; 48) eingeschlossen und die unteren, seitlichen Bereiche des Schneidplättchens in den Halteaussparungen (7, 8) im mittigen Ausschnitt (5) festgelegt werden.

10. Sägekette, dadurch gekennzeichnet, dass sie Schneidglieder nach Anspruch 1 enthält.

**FIG. 1**

**FIG. 3**

**FIG. 2**

FIG. 4

FIG. 5

0 090 773

FIG. 6

FIG. 7

FIG 8

0 090 773